(19) Europäisches Patentamt
European Patent Office
Office européen des brevets

(11) **EP 4 579 856 A1**

(12) **EUROPEAN PATENT APPLICATION**
published in accordance with Art. 153(4) EPC

(43) Date of publication:
**02.07.2025 Bulletin 2025/27**

(21) Application number: **23921775.5**

(22) Date of filing: **15.02.2023**

(51) International Patent Classification (IPC):
***H01M 10/0568*** *(2010.01)*

(52) Cooperative Patent Classification (CPC):
**H01M 10/0568;** Y02E 60/10

(86) International application number:
**PCT/CN2023/076260**

(87) International publication number:
**WO 2024/168612 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
- **HUANG, Lei**
  **Ningde, Fujian 352100 (CN)**
- **HAN, Changlong**
  **Ningde, Fujian 352100 (CN)**
- **WU, Zeli**
  **Ningde, Fujian 352100 (CN)**
- **ZHANG, Cuiping**
  **Ningde, Fujian 352100 (CN)**
- **WANG, Fulin**
  **Ningde, Fujian 352100 (CN)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **SECONDARY BATTERY AND ELECTRIC DEVICE**

(57) This application discloses a secondary battery and an electric apparatus. The secondary battery includes a positive electrode plate, a negative electrode plate, an electrolyte, and a separator sandwiched between the positive electrode plate and the negative electrode plate. The positive electrode plate includes a positive electrode active material. The positive electrode active material includes $LiFe_xM_{(1-x)}PO_4$, where 0<x<1, and M includes at least one of Co, Mn, Ni, Mg, Zn, or Al. The electrolyte includes a lithium salt represented by the following formula (I). The secondary battery meets condition (aa), where C is a mass percentage of the lithium salt in the electrolyte, U is an upper-limit usage voltage of the secondary battery, and U0 is a stable voltage of the lithium salt.

$$5\% \leq C * \frac{U}{U0} \leq 25\% \text{ (aa)}$$

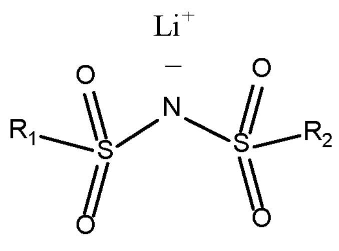

formula (I)

EP 4 579 856 A1

## Description

### TECHNICAL FIELD

This application pertains to the technical field of batteries, and specifically relates to a secondary battery and an electric apparatus.

### BACKGROUND

Lithium-ion batteries have advantages such as high open-circuit voltage, high energy density, long service life, no memory effect, no pollution, and low selfdischarge, making them widely applicable. A positive electrode active material of lithium-ion batteries can be lithium iron phosphate doped with transition metals, for example, the positive electrode active material can be high-voltage solid solution materials such as $LiFe_xMn_{(1-x)}PO_4$, $LiFe_xCo_{(1-x)}PO_4$, and $LiFe_xNi_{(1-x)}PO_4$, but transition metals in the positive electrode active material is prone to dissolution.

The transition metal ions in the positive electrode active material dissolve from a positive electrode to an electrolyte, and driven by electric field, the transition metal ions migrate and deposit on a surface of a graphite negative electrode, damaging a solid electrolyte interface film (SEI), causing the SEI film on the graphite surface to continuously decompose and regenerate, continuously consuming active lithium, and leading to degraded cycling performance of the battery.

Therefore, it is necessary to improve the lithium-ion batteries.

### SUMMARY

The inventors have found that HF is the main cause of the dissolution of transition metal ions from a positive electrode active material. Since an electrolyte is sensitive to moisture, the external environment and electrode plates can introduce water, causing $LiPF_6$ in the electrolyte to decompose and generate HF in the presence of water, which makes it easier for transition metals to dissolve under the action of HF.

To address the above technical problem, this application provides a secondary battery. The secondary battery includes a positive electrode plate, a negative electrode plate, an electrolyte, and a separator sandwiched between the positive electrode plate and the negative electrode plate. The positive electrode plate includes a positive electrode active material, and the positive electrode active material includes $LiFe_xM_{(1-x)}PO_4$, where 0<x<1, and M includes at least one of Co, Mn, Ni, Mg, Zn, or Al;

the electrolyte includes a lithium salt represented by the following formula (I):

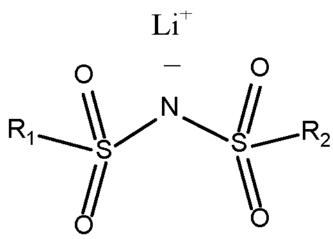

formula (I)

where $R_1$ and $R_2$ each independently include F, $C_{1-4}$ alkyl, or $C_{1-4}$ alkyl substituted by one or more fluorines; and the secondary battery meets the following condition:

$$5\% \leq C * \frac{U}{U0} \leq 25\%,$$

where C is a mass percentage of the lithium salt in the electrolyte, U is an upper-limit usage voltage of the secondary battery, and U0 is a stable voltage of the lithium salt.

Since the lithium salt represented by formula (I) in this application has low sensitivity to water and high temperature, it is not easy to decompose and generate HF. By adding the lithium salt represented by formula (I) to the electrolyte, this application can reduce an HF content in the secondary battery, thereby reducing the dissolution of transition metals from the positive electrode active material, allowing for good cycling performance and kinetic performance for the secondary battery. The inventors have found through experiments that when $5\% \leq C * \frac{U}{U0} \leq 25\%$, the battery has low gas production and good cycling performance.

According to an embodiment of this application, a value of C ranges from 5wt% to 20wt%. Thus, the HF content in the secondary battery can be effectively reduced, improving the performance of the secondary battery and also making the secondary battery have low gas production.

According to an embodiment of this application, a value of U ranges from 3.65 V to 4.35 V. Thus, the secondary battery can have good performance and be stably used for a long time.

According to an embodiment of this application, U0 ranges from 3.5 V to 3.8 V

According to an embodiment of this application, the lithium salt includes at least one of lithium bis(fluorosulfonyl)imide, lithium bis(trifluoromethanesulfonyl)imide, lithium (fluorosulfonyl)(trifluoromethylsulfonyl)imide, lithium bis(pentafluoroethylsulfonyl)imide, or lithium (trifluoromethylsulfonyl)(pentafluorobutylsulfonyl)imide. These lithium salts are not easy to decompose and generate HF, which can effectively reduce the HF content in the secondary battery, making the secondary battery have good performance.

According to an embodiment of this application, the electrolyte further includes a passivator. The passivator includes at least one of vinylene carbonate, vinylethylene carbonate, fluoroethylene carbonate, or 1,3-propanesultone. Thus, with the passivator added, an SEI film with high electronic insulation can be formed at a negative electrode interface, which is conducive to alleviating the deposition of transition metal ions at a negative electrode and enhancing the cycling capability of the secondary battery.

According to an embodiment of this application, the secondary battery meets the following condition:

$$10\% \leq \frac{\boldsymbol{C2}}{\boldsymbol{C3}} \leq 60\%,$$

where C2 is a mass percentage of the passivator in the electrolyte, and C3 is 1-x.

Thus, when the mass percentage of the passivator in the electrolyte and 1-x meet the above proportional relationship, the deposition of transition metals on the negative electrode can be reduced, and cycling performance and kinetic performance of the secondary battery can be further improved.

According to an embodiment of this application, a value of C2 ranges from 1wt% to 6wt%; Thus, the deposition of the transition metal ions on the negative electrode can be further alleviated.

According to an embodiment of this application, a value of C3 ranges from 0.1 to 0.3. Compared with adopting lithium iron phosphate as the positive electrode active material, using lithium iron phosphate doped with transition metals as an electrode active material can improve the working voltage of the secondary battery.

According to an embodiment of this application, the electrolyte further includes ethylene carbonate. Thus, ethylene carbonate can increase concentration of lithium ions in the electrolyte, and enhance liquid phase transmission capability of the electrolyte, further improving performance of the secondary battery.

According to an embodiment of this application, based on a total mass of the electrolyte, a mass percentage of the ethylene carbonate in the electrolyte is 10wt% to 40wt%. Thus, the electrolyte can have high conductivity and good oxygen resistance, which is conducive to further reducing DCR and gas production of the battery.

According to an embodiment of this application, a porosity of the separator ranges from 30% to 50%. Thus, the secondary battery can have good cycling performance and low DCR.

According to an embodiment of this application, a thickness of the separator ranges from 5 μm to 12 μm. Thus, the secondary battery can have good cycling performance and low DCR.

According to an embodiment of this application, a material forming the separator includes at least one of polyethylene, polypropylene, polyvinylidene fluoride, polyester, polyimide, polyamide, glass fiber, cellulose, aramid, or spandex. Thus, the secondary battery can have better cycling performance and lower DCR.

This application further provides an electric apparatus, where the electric apparatus includes the secondary battery described above. Thus, the electric apparatus has all the characteristics and advantages of the secondary battery described above, which are not repeated herein.

## DESCRIPTION OF EMBODIMENTS

The following explains solutions of this application with reference to the embodiments. Persons skilled in the art will understand that the following embodiments are only for illustrating this application and should not be considered as limiting the scope of this application. Examples whose technical solutions or conditions are not specified are made in accordance with technical solutions or conditions described in literature in the field, or made in accordance with product instructions. The reagents or instruments used are all conventional products that are commercially available if no

manufacturer is indicated.

The inventors have found that in secondary batteries, the corrosion incurred by HF easily causes the dissolution of metal ions from a positive electrode active material, which is one of the important factors for the degradation of the cycling performance of the battery. The HF in the batteries mainly comes from an electrolyte. The external environment and electrode plates can introduce water, causing $LiPF_6$ in the electrolyte to decompose and generate HF in the presence of water. In the related technologies, typically water-removal and acid-removal additives are added into the electrolyte to reduce HF in batteries. However, these additives themselves undergo redox reactions at positive and negative electrodes, making it impossible to ensure the presence of the additives throughout the entire use process of the secondary battery. Additionally, byproducts from the reaction of these additives with water or acids still exist in the secondary battery and more or less participate in redox reactions, resulting in the performance deterioration of the secondary battery.

To address the above technical problems, this application provides a secondary battery. The secondary battery includes a positive electrode plate, a negative electrode plate, an electrolyte, and a separator sandwiched between the positive electrode plate and the negative electrode plate. The positive electrode plate includes a positive electrode active material, and the positive electrode active material includes $LiFe_xM_{(1-x)}PO_4$, where $0<x<1$, and M includes at least one of Co, Mn, Ni, Mg, Zn, or Al;

the electrolyte includes a lithium salt represented by the following formula (I):

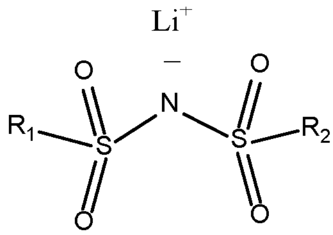

formula (I)

where $R_1$ and $R_2$ each independently include F, $C_{1-4}$ alkyl, or $C_{1-4}$ alkyl substituted by one or more fluorines; and the secondary battery meets the following condition:

$$5\% \leq C * \frac{U}{U0} \leq 25\%,$$

where C is a mass percentage of the lithium salt in the electrolyte, U is an upper-limit usage voltage of the secondary battery, and U0 is a stable voltage of the lithium salt.

Since the lithium salt represented by formula (I) in this application has low sensitivity to water and high temperature, it is not easy to decompose and generate HF. By adding the lithium salt represented by formula (I) to the electrolyte, the HF content in the secondary battery can be effectively reduced, thereby reducing the dissolution of the transition metals from the positive electrode active material, allowing for good cycling performance and kinetic performance for the secondary battery. The inventors have found through experiments that when $5\% \leq C * \frac{U}{U0} \leq 25\%$, the secondary battery has low gas production and good cycling performance.

By adding the lithium salt represented by formula (I) to the electrolyte, this application can reduce the amount of $LiPF_6$ in the electrolyte, and even eliminate the need for $LiPF_6$ in the electrolyte.

It should be noted that U is the upper-limit usage voltage of the secondary battery, and the upper-limit usage voltage of the secondary battery is a maximum allowable voltage of the secondary battery. If the voltage exceeds the upper-limit usage voltage of the secondary battery, this may lead to the performance deterioration of the secondary battery or even incur safety risks. The test method for U is as follows: Provide multiple secondary batteries with the same structure as multiple experimental groups, and charge the secondary batteries of each experimental group to different voltages. Specifically, first charge the secondary battery at a constant current of 0.3C to different voltages with an interval of 0.05 V (for example, 3.6 V, 3.65 V, 3.7 V, 3.75 V, 3.8 V, 3.85 V, 3.9 V, 3.95 V, 4.0 V, 4.05 V, 4.1 V, 4.15 V, 4.2 V, 4.25 V, 4.3 V, 4.35 V, and 4.4 V), and then charge at constant voltage until the current is 0.05C. Subsequently, disassemble the secondary battery of each experimental group, take out the positive electrode active material, and use inductively coupled plasma optical emission spectrometer (ICP-OES) to test a Li content in the positive electrode active material (refer to GBT19282-2014). When the Li content is less than or equal to 0.1wt%, it indicates that the positive electrode has been fully delithiated, and the corresponding battery voltage of this group can be considered as the upper-limit usage voltage of

the secondary battery.

U0 is the stable voltage of the lithium salt, and the stable voltage of the lithium salt is a voltage that can ensure stable usage of the secondary battery. The test method for U0 is as follows: Provide multiple secondary batteries with the same structure as multiple experimental groups. For each experimental group, 1wt% vinylene carbonate and 20wt% of the lithium salt represented by formula (I) are used to prepare the electrolyte and $LiFe_{0.7}Mn_{0.3}PO_4$ is used as the positive electrode active material, so as to make a pouch cell. Charge the secondary batteries of each experimental group to different voltages. Specifically, first charge the secondary battery at a constant current of 0.3C to different voltages with an interval of 0.1 V (for example, 3.3 V, 3.4 V, 3.5 V, 3.6 V, 3.7 V, 3.8 V, or 3.9 V), and then charge at constant voltage until the current is 0.05C. Subsequently, store the secondary batteries of each experimental group at a temperature of 45°C for 3 days, and measure the volume change rate of the secondary batteries of each experimental group before and after storage. The voltage of the secondary battery in the experimental group with a volume change rate of 5% is the stable voltage of the lithium salt. If a voltage of the secondary battery is greater than the stable voltage of the lithium salt, the volume change rate of the secondary battery is greater than 5%. When the voltage of the secondary battery is less than or equal to U0, the volume change of the secondary battery is not significant.

For ease of understanding, the principle by which the secondary battery of this application can achieve the above beneficial effects is briefly explained below.

To improve the performance of lithium-ion batteries, the related technology provides a solution of adding mixed lithium salts to the electrolyte, along with ether and nitrile solvents, and using a nickel-cobalt-manganese ternary material as the positive electrode active material. The positive electrode material in the related technology requires the use of a nickel-cobalt-manganese ternary material and mixed lithium salts, resulting in many restrictions and a narrow applicable range. In this application, the lithium salt represented by formula (I) is added to the electrolyte, which can effectively reduce the dissolution of the transition metals from the positive electrode active material, allowing for good cycling performance and kinetic performance for the secondary battery. The lithium salt in the electrolyte of this application can be a single type of lithium salt, that is, the electrolyte can use only the lithium salt represented by formula (I), and the electrolyte of this application can be a carbonate electrolyte. Compared with the solution in the related technology, the solution of this application has fewer restrictions and a wider applicable range.

Specifically, the inventors have found that the lithium salt represented by formula (I) has low sensitivity to water and high temperature, and is not easy to decompose and generate HF. By adding the lithium salt represented by formula (I) to the electrolyte, the HF content in the secondary battery can be effectively reduced, thereby reducing the dissolution of the transition metals from the positive electrode active material, allowing for good cycling performance and kinetic performance for the secondary battery. However, the lithium salt represented by formula (I) has poor high-voltage stability, and the lithium salt represented by formula (I) is easily oxidized and generates gas under high voltage, leading to increased internal pressure of the battery and swelling of the battery housing. Under high voltage, the amount of the lithium salt represented by formula (I) needs to be adjusted to alleviate gas production. The inventors have found that the performance of the secondary battery is related to the mass percentage of the lithium salt in the electrolyte, the upper-limit usage voltage of the battery, and the stable voltage of the lithium salt. The inventors have found through experiments that when $5\% \leq C * \frac{U}{U0} \leq 25\%$, the battery has low gas production and good cycling performance.

According to an embodiment of this application, a value of C ranges from 5wt% to 20wt%; Thus, the HF content in the secondary battery can be effectively reduced, and the secondary battery can also have low gas production. If the value of C is too small, that is, a mass percentage of the lithium salt in the electrolyte is too small, the generation of HF in the secondary battery cannot be effectively reduced, the dissolution of the transition metals cannot be reduced significantly, which is not conducive to improving the performance of the battery. If the value of C is too large, that is, the mass percentage of the lithium salt in the electrolyte is too large, the lithium salt is easily oxidized and generates gas under high pressure, which is likely to cause excessive gas production in the secondary battery.

According to an embodiment of this application, a value of U ranges from 3.65 V to 4.35 V. Thus, the secondary battery can have good performance and be stably used for a long time.

According to an embodiment of this application, U0 is 3.5 V. The lithium salt in this application can stably exist below 3.5 V.

According to an embodiment of this application, the lithium salt includes at least one of lithium bis(fluorosulfonyl) imide (LiFSI), lithium bis(trifluoromethanesulfonyl)imide (LiTFSI), lithium (fluorosulfonyl)(trifluoromethylsulfonyl)imide (LiFTFSI), lithium bis(pentafluoroethylsulfonyl)imide (LiBESI), or lithium (trifluoromethylsulfonyl)(pentafluorobutylsulfonyl)imide. These lithium salts have low sensitivity to water and high temperature and are not easy to decompose and generate HF, which can effectively reduce the HF content in the secondary battery, allowing for good cycling performance and kinetic performance for the secondary battery.

When the positive electrode is under the corrosion by HF and the action of high voltage, the transition metals are prone to dissolution from the positive electrode active material, and the transition metal ions migrate and diffuse to the negative electrode under the action of electric field and concentration. Although there is an SEI film on the negative

electrode interface, which is theoretically electronically insulating, some electrons still pass through the SEI and reach the SEI/electrolyte interface to combine with transition metal ions, causing the transition metal ions to undergo a reduction reaction and deposit at the negative electrode interface. This further increases the electronic conductivity of the SEI, and further exacerbates side reactions such as transition metal deposition, deteriorating the performance of the secondary battery.

According to an embodiment of this application, to improve the deposition of transition metal ions at the negative electrode, the electrolyte further includes a passivator; where the passivator includes at least one of vinylene carbonate (also known as 1,3-dioxolane-2-one, or vinyl carbonate, abbreviated as VC), vinylethylene carbonate (abbreviated as VEC), fluoroethylene carbonate (abbreviated as FEC), or 1,3-propanesultone (abbreviated as PS). Thus, with the passivator added to the electrolyte, an SEI film with high electronic insulation can be formed at the negative electrode interface, which is conducive to alleviating the deposition of transition metal ions at the negative electrode. Specifically, the passivator can participate in forming the SEI film and produce inorganic components such as $Li_2CO_3$, LiF, and $Li_2SO_3$, reducing the electronic conductivity of the SEI, thereby reducing the electron reduction reaction of transition metal ions and enhancing the cycling capability of the secondary battery.

According to an embodiment of this application, the secondary battery meets the following condition:

$$10\% \leq \frac{C2}{C3} \leq 60\%,$$

where C2 is a mass percentage of the passivator in the electrolyte, and C3 is 1-x.

The inventors have found that the mass percentage of the passivator in the electrolyte and 1-x both affect the performance of the secondary battery. The inventors have found through experiments that when $10\% \leq \frac{C2}{C3} \leq 60\%$, the deposition of transition metals on the negative electrode of the secondary battery can be reduced, allowing for good cycling performance and kinetic performance for the battery.

According to an embodiment of this application, a value of C2 ranges from 1wt% to 6wt%. Thus, an SEI film with high electronic insulation can be formed at the negative electrode interface, effectively alleviating the deposition of transition metal ions at the negative electrode. If the value of C2 is too small, that is, the amount of the passivator is too small, the passivator has limited effects on reducing the electronic conductivity of the SEI and the improvement to the cycling capability of the secondary battery is small. If the value of C2 is too large, that is, the amount of the passivator is too large, the SEI film may be too thick, which is not conducive to lithium ion transmission, deteriorating the kinetic performance of the battery.

According to an embodiment of this application, a value of C3 ranges from 0.1 to 0.3, that is, $0.7 \leq x \leq 0.9$. Compared with adopting lithium iron phosphate as the positive electrode active material, using $LiFe_xM_{(1-x)}PO_4$ as the electrode active material can improve the working voltage of the secondary battery.

According to an embodiment of this application, the electrolyte further includes ethylene carbonate (EC). Ethylene carbonate (EC) has a relatively high dielectric constant, which can promote the dissociation of various lithium salts (such as the lithium salt represented by formula (I)) in the electrolyte, increase the concentration of lithium ions in the electrolyte, and enhance the liquid phase transmission capability of the electrolyte, further improving the performance of the secondary battery.

According to an embodiment of this application, based on a total mass of the electrolyte, a mass percentage of the ethylene carbonate in the electrolyte is 10wt% to 40wt%. Thus, the electrolyte can have high conductivity and good oxygen resistance, which is conducive to reducing DCR and gas production of the secondary battery. If a percentage of ethylene carbonate is too low, the increase in the concentration of lithium ions in the electrolyte is small, and the improvement to the performance of the secondary battery is small. However, ethylene carbonate has poor oxidation resistance. On the one hand, the ethylene carbonate is easily oxidized at high voltage, leading to gas production. On the other hand, ethylene carbonate forms $Li_2CO_3$ in situ at the negative electrode, and then migrates to the positive electrode for oxidation. Additionally, ethylene carbonate or $Li_2CO_3$ undergoes hydrolysis or thermal decomposition, leading to an increase in $CO_2$. If the percentage of ethylene carbonate is too high, it is likely to cause excessive gas production in the secondary battery.

According to an embodiment of this application, a porosity of the separator ranges from 30% to 50%. Thus, the secondary battery can have good cycling performance and low DCR. If the porosity of the separator is too small, the migration of lithium ions is too slow, and DCR of the battery is too high. If the porosity of the separator is too large, the migration of transition metal ions is fast, resulting in more side reactions in the battery, leading to the performance deterioration of the secondary battery.

According to an embodiment of this application, a thickness of the separator ranges from 5 $\mu$m to 12 $\mu$m. Thus, the battery can have good cycling performance and low DCR, allowing the battery to have high safety performance. If the thickness of the separator is too small, safety risks are likely to occur; if the thickness of the separator is too large, the

migration of lithium ions is slow, and the DCR of the secondary battery is large.

According to an embodiment of this application, a material forming the separator includes at least one of polyethylene, polypropylene, polyvinylidene fluoride, polyester, polyimide, polyamide, glass fiber, cellulose, aramid, or spandex. Thus, the secondary battery can have better cycling performance and lower DCR.

This application further provides an electric apparatus, where the electric apparatus includes the secondary battery described above. Thus, the electric apparatus has all the characteristics and advantages of the secondary battery described above, which are not repeated herein.

The secondary battery is used to provide electrical energy for the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The examples described below in this application, unless otherwise specified, the reagents used can be purchased from the market or prepared by the methods described in this application.

Example 1

Preparation of positive electrode plate:

Iron source, M source, phosphorus source, lithium source, lithium fluoride, and carbon source were mixed evenly and ball-milled to obtain the precursor. The precursor was placed in a tube furnace, and calcined after an inert gas was introduced. After the calcination ended, the precursor was cooled to room temperature, and the resulting solid was pulverized using a jet milling method to obtain a sample of the positive electrode active material $LiFe_xM_{(1-x)}PO_4$.

The positive electrode active material, polyvinylidene fluoride (PVDF), and carbon black (SP) were mixed at a mass ratio of 97:2:1 with a solvent and stirred to produce a uniformly dispersed positive electrode slurry, and the positive electrode slurry was evenly applied on both surfaces of aluminum foil, followed by drying, cold pressing, and cutting to obtain a positive electrode plate.

Preparation of negative electrode plate:

A negative electrode active material (artificial graphite), carbon black (SP), styrene-butadiene rubber (SBR), and sodium carboxymethyl cellulose (CMC) were mixed at a ratio of 97:0.5:1.5:1 with a solvent, a pore-forming agent was added, and stirring was performed to produce a uniformly dispersed negative electrode slurry. The negative electrode slurry was evenly applied on both surfaces of copper foil, followed by drying, cold pressing, and cutting to obtain a negative electrode plate.

Separator:

A polyethylene film was used as a separator.

Preparation of electrolyte:

In an argon atmosphere glove box, according to the percentage of each component in Table 1, 30% ethylene carbonate (EC), 40% dimethyl carbonate (DMC), 5% ethyl methyl carbonate (EMC), 7% diethyl carbonate (DEC), 3% vinylene carbonate (VC), 5% lithium hexafluorophosphate ($LiPF_6$), and 10% lithium bis(fluorosulfonyl)imide (LiFSI) were mixed and dissolved by mass to obtain an electrolyte.

Preparation of lithium-ion battery:

The positive electrode plate, the negative electrode plate, and the separator were assembled into an electrode assembly through winding or lamination, and the electrode assembly was placed in a housing formed by an aluminum shell, an aluminum-plastic film, and the like. Then electrolyte injection, high-temperature standing, formation, and capacity grading were performed to obtain the secondary battery.

Examples 2 to 25 and Comparative Examples 1 and 2

Following the procedures of Example 1 and Table 1, secondary batteries of Examples 2 to 25 and Comparative Examples 1 and 2 were obtained.

Performance tests were conducted on the secondary batteries prepared in Examples 1 to 25 and Comparative Examples 1 and 2. The specific measurement methods are described below, and the test results are given in Table 1.

(1) Measurement of high-temperature cycling performance at 60°C

At 60°C, the secondary battery of each example and comparative example was charged at a constant current of 0.5C to an upper-limit usage voltage (taking Example 1 as an example, the upper-limit usage voltage was 4.2 V), and then constant-voltage charged to a current of 0.05C. The battery was left standing for 5 minutes and discharged at a constant current of 1/3C to 2.5 V. This was a first charge-discharge cycle of the secondary battery, and the discharge capacity at this cycle was recorded as discharge capacity for the first cycle of the secondary battery. Cyclic charge-discharge tests were performed on the secondary battery according to the above method, and the capacity retention rate after 500 cycles was recorded.

(2) Volume swelling rate test at 60°C

At 60°C, the secondary battery was charged at a constant current of 0.5C to an upper-limit usage voltage (taking Example 1 as an example, the upper-limit usage voltage was 4.2 V), and then constant-voltage charged to a current of 0.05C. A volume of the secondary battery at this point was measured using a drainage method and recorded as V0. The secondary battery was placed in a 60°C thermostat, stored for 30 days and then taken out. A volume of the secondary battery at this point was measured using the drainage method and recorded as V1. The volume swelling rate of the secondary battery after storage at 60°C for 30 days=[(V1-V0)/V0]×100%.

(3) DCR test

At 60°C, the secondary battery was charged at a constant current of 0.5C to an upper-limit usage voltage (taking Example 1 as an example, the upper-limit usage voltage was 4.2 V), and then constant-voltage charged to a current of 0.05C. Subsequently, the battery was discharged at 0.5C for 1 hour to adjust to 50%SOC, and the voltage at that point was recorded as U1. Then, the battery was discharged at 4C for 30 seconds, and the voltage at that point was recorded as U2. DCR=(U1-U2)/4C.

(4) Porosity

Conduct the test according to the method in GB/T 24586-2009.

**Table 1**

| Number | Components of electrolyte and respective weight percentages (wt%) | | | | | | | | | | | | Thickness of separator (μm) | Porosity of separator | Percentage of M (wt%) | U (V) | U0 (V) | C*(U/U0) | C2/C3 | Volume swelling rate | Capacity retention rate (%) | DCR (mΩ) |
|---|---|---|---|---|---|---|---|---|---|---|---|---|---|---|---|---|---|---|---|---|---|---|
| | EC | DMC | EMC | DEC | VC | FEC | VEC | PS | $LiPF_6$ | LiFSI | LiTFSI | LiBESI | | | | | | | | | | |
| Example 1 | 30 | 40 | 5 | 7 | 3 | | | | 5 | 10 | | | 9 | 35% | 25% | 4.20 | 3.5 | 12.0% | 12% | 31.0% | 90.9% | 33 |
| Example 2 | 30 | 40 | 5 | 7 | | 3 | | | 5 | 10 | | | 9 | 35% | 25% | 4.20 | 3.5 | 12.0% | 12% | 35.3% | 90.1% | 27 |
| Example 3 | 30 | 40 | 5 | 7 | | | 3 | | 5 | 10 | | | 9 | 35% | 25% | 4.20 | 3.5 | 12.0% | 12% | 32.1% | 90.2% | 31 |
| Example 4 | 30 | 40 | 5 | 7 | | | | 3 | 5 | 10 | | | 9 | 35% | 25% | 4.20 | 3.5 | 12.0% | 12% | 29.6% | 90.9% | 35 |
| Example 5 | 30 | 40 | 5 | 7 | 3 | | | | 5 | | 10 | | 9 | 35% | 25% | 4.20 | 3.5 | 12.0% | 12% | 32.0% | 90.9% | 34 |
| Example 6 | 30 | 40 | 5 | 7 | 3 | | | | 5 | | | 10 | 9 | 35% | 25% | 4.20 | 3.5 | 12.0% | 12% | 30.5% | 91.0% | 37 |
| Example 7 | 30 | 40 | 5 | 8 | 2 | | | | 5 | 10 | | | 9 | 35% | 25% | 4.20 | 3.5 | 12.0% | 8% | 34.2% | 89.7% | 25 |
| Example 8 | 30 | 40 | 5 | 4 | 6 | | | | 5 | 10 | | | 9 | 35% | 25% | 4.20 | 3.5 | 12.0% | 24% | 30.0% | 92.8% | 41 |
| Example 9 | 10 | 40 | 5 | 27 | 3 | | | | 5 | 10 | | | 9 | 35% | 25% | 4.20 | 3.5 | 12.0% | 12% | 28.2% | 91.0% | 38 |
| Example 10 | 40 | 40 | 0 | 2 | 3 | | | | 5 | 10 | | | 9 | 35% | 25% | 4.20 | 3.5 | 12.0% | 12% | 33.5% | 89.9% | 28 |
| Example 11 | 30 | 40 | 5 | 7 | 3 | | | | 10 | 5 | | | 9 | 35% | 25% | 4.20 | 3.5 | 6.0% | 12% | 25.1% | 90.2% | 36 |
| Example 12 | 30 | 40 | 5 | 2 | 3 | | | | | 20 | | | 9 | 35% | 25% | 4.20 | 3.5 | 24.0% | 12% | 39.8% | 91.3% | 28 |
| Example 13 | 30 | 40 | 5 | 7 | 3 | | | | 5 | 10 | | | 9 | 35% | 10% | 4.20 | 3.5 | 12.0% | 30% | 27.0% | 93.0% | 45 |
| Example 14 | 30 | 40 | 5 | 7 | 3 | | | | 5 | 10 | | | 9 | 35% | 30% | 4.20 | 3.5 | 12.0% | 10% | 33.2% | 90.0% | 28 |

| Number | Components of electrolyte and respective weight percentages (wt%) | | | | | | | | | | | | Thickness of separator (μm) | Porosity of separator | Percentage of M (wt%) | U (V) | U0 (V) | C*(U/U0) | C2/C3 | Volume swelling rate | Capacity retention rate (%) | DCR (mΩ) |
|---|---|---|---|---|---|---|---|---|---|---|---|---|---|---|---|---|---|---|---|---|---|---|
| | EC | DMC | EMC | DEC | VC | FEC | VEC | PS | $LiPF_6$ | LiFSI | LiTFSI | LiBESI | | | | | | | | | | |
| Example 15 | 30 | 40 | 5 | 7 | 3 | | | | 5 | 10 | | | 9 | 35% | 25% | 3.80 | 3.5 | 10.9% | 12% | 24.0% | 91.6% | 33 |
| Example 16 | 30 | 40 | 5 | 7 | 3 | | | | 5 | 10 | | | 9 | 35% | 25% | 4.35 | 3.5 | 12.4% | 12% | 37.4% | 90.2% | 33 |
| Example 17 | 30 | 40 | 5 | 4 | 6 | | | | 5 | 10 | | | 5 | 35% | 25% | 4.20 | 3.5 | 12.0% | 24% | 32.2% | 89.5% | 27 |
| Example 18 | 30 | 40 | 5 | 7 | 3 | | | | 5 | 10 | | | 12 | 35% | 25% | 4.20 | 3.5 | 12.0% | 12% | 30.7% | 91.0% | 36 |
| Example 19 | 30 | 40 | 5 | 7 | 3 | | | | 5 | 10 | | | 9 | 30% | 25% | 4.20 | 3.5 | 12.0% | 12% | 30.5% | 91.0% | 31 |
| Example 20 | 30 | 40 | 5 | 7 | 3 | | | | 5 | 10 | | | 9 | 40% | 25% | 4.20 | 3.5 | 12.0% | 12% | 31.6% | 90.8% | 31 |
| Example 21 | 30 | 40 | 5 | 4 | 6 | | | | 5 | 10 | | | 9 | 35% | 15% | 4.20 | 3.5 | 12.0% | 40% | 27.0% | 93.5% | 49 |
| Example 22 | 30 | 40 | 5 | 2 | 3 | | | | | 20 | | | 9 | 35% | 25% | 4.30 | 3.5 | 24.6% | 12% | 41.3% | 92.0% | 32 |
| Example 23 | | 40 | 5 | 37 | 3 | | | | 5 | 10 | | | 9 | 35% | 25% | 4.20 | 3.5 | 12.0% | 12% | 25.3% | 83.4% | 60 |
| Example 24 | 30 | 40 | 5 | 10 | | | | | 5 | 10 | | | 9 | 35% | 25% | 4.20 | 3.5 | 12.0% | 0% | 63.3% | 85.7% | 30 |
| Example 25 | 30 | 40 | 5 | 7 | 3 | | | | 5 | 10 | | | 9 | 35% | 40% | 4.20 | 3.5 | 12.0% | 8% | 54.0% | 81.1% | 25 |
| Comparative example 1 | 30 | 40 | 5 | 10 | | | | | 15 | | | | 12 | 35% | 25% | 4.20 | 3.5 | 0.0% | 0% | 56.0% | 82.1% | 33 |
| Comparative example 2 | 30 | 40 | 5 | 9 | 1 | | | | 13 | 2 | | | 12 | 35% | 25% | 4.20 | 3.5 | 2.4% | 4% | 50.1% | 84.2% | 30 |

As shown in Table 1, the comprehensive performance of the secondary batteries in Examples 1 to 25 is superior to that of the secondary batteries in Comparative examples 1 and 2. The secondary batteries in Examples 1 to 25 have lower volume swelling rate, higher capacity retention rate, and lower DCR. The secondary batteries in the embodiments of this application can have a volume swelling rate as low as 24%, a capacity retention rate as high as 93.5%, and a DCR as low as 25 mΩ. In Comparative example 1, due to the absence of the passivator and the lithium salt represented by formula (I) in the electrolyte, the produced secondary battery has a higher volume swelling rate and a lower capacity retention rate. In Comparative example 2, due to the excessively low percentage of the lithium salt represented by formula (I) added to the electrolyte, the produced secondary battery has a higher volume swelling rate, resulting in poor comprehensive performance of the secondary battery.

The above describes the embodiments of this application in detail; however, this application is not limited to the specific details of the above embodiments. Various simple modifications to the technical solutions of this application can be made within the technical concept of this application, and these simple modifications are all within the protection scope of this application. Additionally, it should be noted that the specific technical features described in the above specific embodiments can be combined in any suitable manner, provided that there is no conflict.

In the description of this specification, the terms "an embodiment", "some embodiments", "an example", "a specific example", or "some examples" mean the specific features, structures, materials or characteristics described with reference to the embodiment or example are included in at least one embodiment or example of this application. In this specification, the illustrative expressions of these terms do not necessarily refer to the same embodiment or example. In addition, the specific feature, structure, material or characteristic described can be combined in any appropriate manner in any one or more embodiments or examples. Besides, without mutual conflict, persons skilled in the art can incorporate and combine different embodiments or examples and features of the different embodiments or examples described in this specification.

Although the examples of this application have been shown and described, it is understood that these examples are illustrative and should not be construed as limitations on this application. A person of ordinary skill in the art can make changes, modifications, substitutions, and transformations to the examples within the scope of this application.

## Claims

1. A secondary battery, wherein the secondary battery comprises a positive electrode plate, a negative electrode plate, an electrolyte, and a separator sandwiched between the positive electrode plate and the negative electrode plate, the positive electrode plate comprises a positive electrode active material, and the positive electrode active material comprises $LiFexM(1-x)PO_4$, wherein $0<x<1$, and M comprises at least one of Co, Mn, Ni, Mg, Zn, or Al;
   the electrolyte comprises a lithium salt represented by the following formula (I):

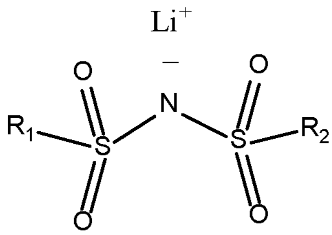

formula (I)

wherein $R_1$ and $R_2$ each independently comprise F, $C_{1-4}$ alkyl, or $C_{1-4}$ alkyl substituted by one or more fluorines; and
the secondary battery meets the following condition:

$$5\% \leq C * \frac{U}{U0} \leq 25\%,$$

wherein C is a mass percentage of the lithium salt in the electrolyte, U is an upper-limit usage voltage of the secondary battery, and U0 is a stable voltage of the lithium salt.

**2.** The secondary battery according to claim 1, wherein a value of C ranges from 5wt% to 20wt%.

**3.** The secondary battery according to claim 1 or 2, wherein a value of U ranges from 3.65 V to 4.35 V

**4.** The secondary battery according to any one of claims 1 to 3, wherein a value of U0 ranges from 3.5 V to 3.8 V.

**5.** The secondary battery according to any one of claims 1 to 4, wherein the lithium salt comprises at least one of lithium bis(fluorosulfonyl)imide, lithium bis(trifluoromethanesulfonyl)imide, lithium (fluorosulfonyl)(trifluoromethylsulfonyl) imide, lithium bis(pentafluoroethylsulfonyl)imide, or lithium (trifluoromethylsulfonyl)(pentafluorobutylsulfonyl)imide.

**6.** The secondary battery according to any one of claims 1 to 5, wherein the electrolyte further comprises a passivator; and
the passivator comprises at least one of vinylene carbonate, vinylethylene carbonate, fluoroethylene carbonate, or 1,3-propanesultone.

**7.** The secondary battery according to claim 6, wherein the secondary battery satisfies the following condition:

$$10\% \leq \frac{C2}{C3} \leq 60\%,$$

wherein C2 is a mass percentage of the passivator in the electrolyte, and C3 is 1-x.

**8.** The secondary battery according to claim 7, wherein a value of C2 ranges from 1wt% to 6wt%.

**9.** The secondary battery according to claim 7 or 8, wherein a value of C3 ranges from 0.1 to 0.3.

**10.** The secondary battery according to any one of claims 1 to 9, wherein the electrolyte further comprises ethylene carbonate.

**11.** The secondary battery according to claim 10, wherein based on a total mass of the electrolyte, a mass percentage of the ethylene carbonate in the electrolyte is 10wt% to 40wt%.

**12.** The secondary battery according to any one of claims 1 to 11, wherein a porosity of the separator is 30% to 50%.

**13.** The secondary battery according to any one of claims 1 to 12, wherein a thickness of the separator is 5 $\mu$m to 12 $\mu$m.

**14.** The secondary battery according to any one of claims 1 to 13, wherein a material forming the separator comprises at

least one of polyethylene, polypropylene, polyvinylidene fluoride, polyester, polyimide, polyamide, glass fiber, cellulose, aramid, or spandex.

**15.** An electric apparatus, wherein the electric apparatus comprises the secondary battery according to any one of claims 1 to 14.

**INTERNATIONAL SEARCH REPORT**

International application No.
**PCT/CN2023/076260**

**A. CLASSIFICATION OF SUBJECT MATTER**

H01M10/0568(2010.01)i

According to International Patent Classification (IPC) or to both national classification and IPC

**B. FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 磺酰, 亚胺锂, LiTFSI, 磷酸铁锰锂, 磷酸锰铁锂, LMFP, LFMP, 浓度, 质量, 含量, 电压, batteries, sulfonyl, lithium, imide, iron, manganese, phosphate, concentration, mass, content, voltage

**C. DOCUMENTS CONSIDERED TO BE RELEVANT**

| Category* | Citation of document, with indication, where appropriate, of the relevant passages | Relevant to claim No. |
|---|---|---|
| X | CN 109830751 A (SHANGHAI FLUOKING NEW MATERIAL TECHNOLOGY CO., LTD.) 31 May 2019 (2019-05-31)<br>description, paragraphs 4-63 | 1-12 |
| X | CN 109119685 A (NINGDE CONTEMPORARY AMPEREX TECHNOLOGY CO., LTD.) 01 January 2019 (2019-01-01)<br>description, paragraphs 6-58 | 1-12 |
| X | CN 111640975 A (ACCUMULATEURS FIXES) 08 September 2020 (2020-09-08)<br>description, paragraphs 61-207 | 1-12 |
| X | CN 114649591 A (NINGDE AMPEREX TECHNOLOGY LTD.) 21 June 2022 (2022-06-21)<br>description, paragraphs 3-148 | 1-12 |
| X | US 2015249269 A1 (LG CHEMICAL LTD.) 03 September 2015 (2015-09-03)<br>description, paragraphs 10-87 | 1-12 |
| X | WO 2023276863 A1 (GS YUASA INTERNATIONAL LTD.) 05 January 2023 (2023-01-05)<br>description, paragraphs 5-114 | 1-12 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 July 2023** | **19 July 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/076260**

| Patent document cited in search report | Publication date (day/month/year) | Patent family member(s) | Publication date (day/month/year) |
|---|---|---|---|
| CN 109830751 A | 31 May 2019 | None | |
| CN 109119685 A | 01 January 2019 | EP 3419096 A1 | 26 December 2018 |
| | | EP 3419096 B1 | 23 September 2020 |
| | | US 2018375154 A1 | 27 December 2018 |
| CN 111640975 A | 08 September 2020 | FR 3093379 A1 | 04 September 2020 |
| | | FR 3093379 B1 | 30 September 2022 |
| | | US 2020280100 A1 | 03 September 2020 |
| | | EP 3703174 A1 | 02 September 2020 |
| CN 114649591 A | 21 June 2022 | None | |
| US 2015249269 A1 | 03 September 2015 | KR 20140066645 A | 02 June 2014 |
| | | KR 20150102916 A | 09 September 2015 |
| | | WO 2014081240 A1 | 30 May 2014 |
| WO 2023276863 A1 | 05 January 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB T245862009 A